# DEMANDE DE BREVET EUROPEEN

(11) **EP 2 236 780 A1**
(43) Date de publication de la demande: **06.10.2010**
(21) Numéro de dépôt: 10158170.0
(22) Date de dépôt: 29.03.2010
(51) Int. Cl.: F01M 13/00, F01M 13/04

(54) **Dispositif de réchauffage d'un fluide circulant dans un tube thermiquement conducteur notamment dans un véhicule automobile, son procédé d'assemblage et un système de raccordement entre l'admission d'air et le tuyau de " blow- by " incluant ce dernier pour un moteur thermique à combustion interne**

(30) Priorité: 30.03.2009 FR 0901532
(71) Demandeur: Hutchinson, 75008 Paris (FR)
(72) Inventeur: Benard, Thierry, 45430, Checy (FR); Sinault, Yann, 45200, Montargis (FR)
(74) Mandataire: Bolinches, Michel Jean-Marie

(57) **Abrégé**

La présente invention concerne un dispositif de réchauffage d'un fluide circulant dans un tube thermiquement conducteur notamment dans un véhicule automobile, son procédé d'assemblage et un système l'incorporant pour le raccordement rapide à un embout d'admission d'air d'un tuyau « blow-by » de fuite des gaz d'un moteur thermique à combustion interne.

Ce dispositif de réchauffage (1) comporte :
- au moins une thermistance « CTP » (4),
- ce tube (2) hors duquel est positionnée la thermistance, et
- un connecteur électrique chauffant (3) dont une partie de support (3a) porte la thermistance et dont une partie de connexion électrique (3b) est destinée à l'alimenter en électricité.

Selon l'invention, ce dispositif comporte en outre un manchon de raccordement (5) monté autour du tube et définissant, radialement entre le tube et le manchon, un logement (7) qui reçoit la thermistance à distance du tube qui contient une colle thermiquement conductrice (8) venant au contact du tube et entourant cette thermistance, de sorte que cette colle assure la conduction thermique entre la thermistance et le tube.

## Description

La présente invention concerne un dispositif de réchauffage d'un fluide circulant dans un tube thermiquement conducteur notamment dans un véhicule automobile, un procédé d'assemblage de ce dispositif et un système l'incorporant pour le raccordement rapide à un embout d'admission d'air d'un tuyau de fuite des gaz d'un moteur thermique à combustion interne. Un tel tuyau, pour le passage des gaz de la chambre de combustion au carter du moteur, est largement connu sous l'appellation anglaise « blow-by ».

D'une manière générale, les connectiques rapides des véhicules automobiles ont pour fonction de connecter les tuyaux de transfert de fluide aux organes du moteur. En particulier, des réchauffeurs de fluide sont utilisés dans des systèmes de dépollution où l'on réinjecte dans le tuyau d'admission d'air les résidus gazeux de la combustion du moteur qui s'accumulent dans le carter moteur et qui contiennent notamment de l'eau. Par grand froid, cette eau peut givrer et entraîner l'obstruction du tuyau, ce qui peut provoquer en cas d'obstruction totale une augmentation de la pression dans le carter moteur conduisant à une évacuation de l'huile de lubrification contenue dans le carter par les prises de jauge de mesure. Il peut en résulter des dommages importants pour le moteur.

Actuellement, existent des dispositifs chauffants à base de composants « CTP » à coefficient de température positif (« PTC » en anglais pour Positive Temperature Coefficient) pour réchauffer un fluide circulant dans un tube thermiquement conducteur, typiquement en aluminium. En effet, les éléments chauffant à composants « CTP » sont de faible surface (diamètre d'environ 8 mm), ce qui conduit à utiliser un tube métallique pour augmenter artificiellement la surface d'échange entre le fluide et l'élément chauffant.

Il existe plusieurs façons de relier thermiquement le composant « CTP » au tube métallique, en général par une soudure ou bien une pression du composant sur ce tube.

Dans le cas de la liaison par soudure, le composant « CTP » est soudé directement sur le tube, avec par conséquent une liaison thermique parfaite entre ce composant et le tube métallique. Pour assurer l'étanchéité de l'ensemble, on réalise usuellement un surmoulage de la zone soudée par un matériau thermoplastique, mais avec une étanchéité pouvant laisser à désirer du fait la liaison plastique / métal qui n'est par définition pas parfaitement étanche et qui peut générer très rapidement une ligne de fuite à cause du phénomène de dilatation différentielle entre les deux matériaux métallique et thermoplastique. Cette première solution présente donc l'inconvénient de ne pas être fiable vis-à-vis de l'exigence d'étanchéité.

Dans le cas de la liaison par pression, on procède à un surmoulage du tube par un matériau thermoplastique, en prévoyant de créer un logement pour l'insertion du composant « CTP », qui est alors parfaitement isolé du fluide. Cependant, un inconvénient de cette seconde solution réside dans l'épaisseur de matériau thermoplastique nécessaire à l'étanchéité qui dégrade les performances thermiques du dispositif de réchauffage.

Le document EP-B1-1 164 264 présente un dispositif de réchauffage à thermistance « CTP » montée autour d'un tube métallique, où plusieurs composants « CTP » reliés entre eux par une bande électriquement conductrice et par des broches de contact électrique de la thermistance sont appliqués sous forte pression contre le tube métallique véhiculant le fluide à réchauffer, par l'intermédiaire d'une colle silicone électriquement isolante. Le contact électrique de ces composants avec le tube est obtenu par la solidarisation par rivetage sur ce tube de l'une des broches de contact et également grâce à la rugosité de surface du tube.

Un inconvénient majeur du dispositif de réchauffage décrit dans ce document réside dans son entretien malaisé, en raison notamment de la solidarisation des composants « CTP » et des broches de contact associées avec le tube.

Un but de la présente invention est de proposer un dispositif de réchauffage d'un fluide circulant dans un tube thermiquement conducteur, en particulier pour un raccordement rapide à un embout d'admission d'air d'un tuyau « blow-by », ce dispositif remédiant aux inconvénients précités et comportant :
- au moins une thermistance « CTP »,
- ce tube hors duquel est positionnée la thermistance, et
- un connecteur électrique chauffant dont une partie de support porte la thermistance et dont une partie de connexion électrique est destinée à l'alimenter en électricité.

A cet effet, un dispositif selon l'invention est tel que ce dispositif comporte en outre un manchon de raccordement en matière plastique monté autour du tube et définissant, radialement entre le tube et le manchon, un logement qui reçoit la thermistance à distance du tube et qui contient une colle thermiquement conductrice venant au contact du tube et entourant la thermistance, de sorte que cette colle assure la conduction thermique entre la thermistance et le tube.

On notera que la colle selon l'invention réalise ainsi un pont thermique performant entre la thermistance et le tube, qui sont avantageusement séparés entre eux d'une faible distance par exemple de l'ordre du mm.

Selon une autre caractéristique préférentielle de l'invention, ladite colle est apte à adhérer au tube, lequel est métallique en étant avantageusement à base d'aluminium (i.e. exclusivement ou majoritairement constitué d'aluminium, incluant par exemple un alliage d'aluminium), de sorte à le maintenir en position à l'intérieur du manchon et à assurer en outre l'étanchéité du raccordement.

En d'autres termes, la colle selon l'invention réalise non seulement le pont thermique précité, mais garantit en outre avantageusement, d'une part, l'étanchéité de l'assemblage du fait qu'elle enveloppe complètement l'ensemble de la thermistance et, d'autre part, le maintien du tube dans le système de raccordement grâce à son bon pouvoir adhésif sur le tube.

Selon une autre caractéristique de l'invention, la thermistance est de préférence à effet « CTP », et sur ses deux faces sont respectivement soudées deux languettes métalliques, l'ensemble étant immergé à distance du tube dans la colle.

Selon une autre caractéristique de l'invention, ledit logement présente une entrée débouchant à l'extérieur du manchon pour l'insertion de la thermistance et se termine par un fond de préférence au moins en partie en regard de cette entrée, de sorte que ce logement s'étende sensiblement tangentiellement au tube. Avantageusement, l'entrée et le fond de ce logement sont reliés entre eux par une paroi dont une face radialement interne aboutit au contact du tube, cette paroi étant de section transversale par exemple polygonale ou arrondie et étant tronquée par une portion concave en arc de cercle formée par le tube qui fait saillie dans ce logement.

Selon une autre caractéristique de l'invention, le connecteur peut être monté par clipage sur le manchon, par l'intermédiaire de moyens de clipage qui sont formés sur ladite partie de support du connecteur et qui coopèrent avec des moyens complémentaires formés sur la face externe dudit logement à proximité de ladite entrée. On notera toutefois que d'autres types de solidarisation mécanique sont envisageables pour monter le connecteur sur le manchon. Suite à ce clipage, on notera que c'est ladite colle qui peut permettre d'assurer le maintien du connecteur sur le manchon, du fait que cette colle vient avantageusement au contact de la partie de support du connecteur au sein du logement qui en est rempli et qui est prévu suffisamment profond à cet effet.

Avantageusement, le manchon peut former un embout de raccordement dans lequel est emmanchée une extrémité du tube, ce manchon présentant une extrémité de raccordement axialement extérieure au tube de préférence en forme de queue de sapin, et une extrémité opposée pouvant être verrouillée sur ce tube par un organe de verrouillage tel qu'une épingle, par exemple.

Selon une autre caractéristique de l'invention, ladite colle est prévue électriquement isolante pour éviter tout court-circuit, et il peut avantageusement s'agir d'une colle thermique époxy qui est de préférence chargée avec une ou plusieurs charges inorganiques telles que l'alumine et/ou le nitrure de bore. La thermistance selon l'invention peut être alors positionnée à environ 1 mm du tube, et elle peut avantageusement présenter alors une conductivité thermique d'environ 1 W m⁻¹K⁻¹.

Avantageusement, le tube est à base d'aluminium et peut présenter une paroi en forme de cylindre fendu sur sa longueur. Ce tube fendu peut être obtenu par un procédé de roulage très peu coûteux à mettre en oeuvre, à partir d'une feuille d'aluminium que l'on façonne par opérations successives pour lui donner sa forme cylindrique finale. Grâce à la colle thermiquement conductrice selon l'invention qui vient se répandre sur toute la paroi du tube accessible dans le logement du manchon, on peut s'affranchir des imperfections de cette paroi et des tolérances de forme du tube (notamment de sa circularité pouvant être imparfaite), ce qui n'était pas possible dans l'état antérieur de la technique précité utilisant un surmoulage du tube par un matériau thermoplastique.

Un procédé d'assemblage selon l'invention d'un dispositif de réchauffage tel que défini ci-dessus comprend essentiellement le remplissage dudit logement du manchon par ladite colle à l'état liquide de manière qu'elle vienne au contact du tube, puis l'immersion totale de la thermistance dans cette colle pour que cette dernière assure la conduction thermique entre cette thermistance et le tube tout en maintenant ce dernier de manière étanche à l'intérieur du manchon.

Un système de raccordement rapide selon l'invention à un embout d'admission d'air d'un tuyau de fuite des gaz d'un moteur thermique à combustion interne, comprend un dispositif de réchauffage tel qu'également défini ci-dessus.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique partielle de dessus montrant, en référence à la figure 4, l'agencement autour du tube véhiculant le fluide à réchauffer du manchon définissant le logement pour la thermistance et la colle au sein du dispositif selon l'invention,
la figure 2 est une vue en perspective éclatée d'un dispositif de réchauffage selon l'invention montrant le connecteur, ce tube, ce manchon l'entourant et un volume de colle dans lequel est plongée la thermistance,
la figure 3 est une vue en perspective assemblée du dispositif de la figure 2 qui est pourvu en outre d'un moyen de verrouillage du manchon sur le tube,
la figure 4 est une vue partielle de détail du logement selon l'invention défini dans le manchon autour du tube, avant son remplissage par la colle et puis par la thermistance,
la figure 5 est une vue en perspective de ce tube selon un exemple préférentiel de réalisation de l'invention, et
la figure 6 est une vue en perspective assemblée et en partie en coupe du dispositif de la figure 3 montré sous un autre angle et sans ledit moyen de verrouillage.

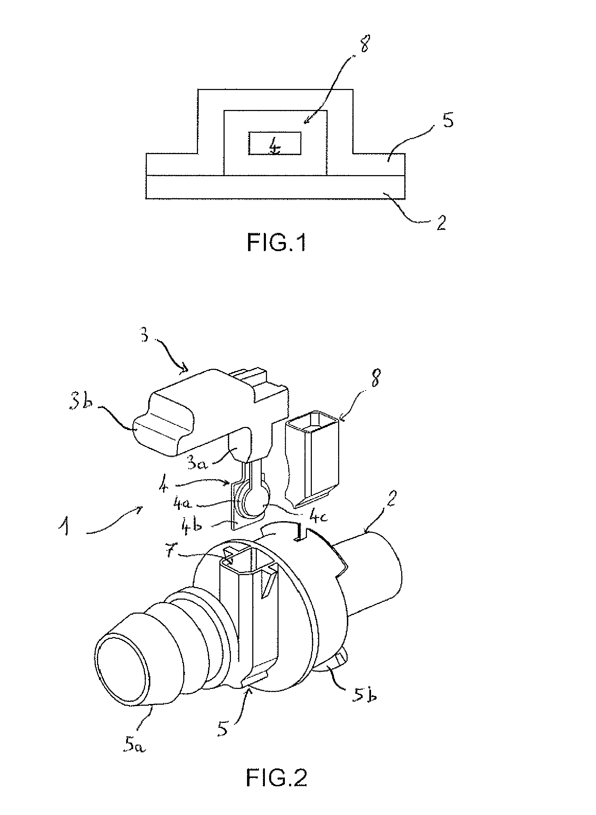

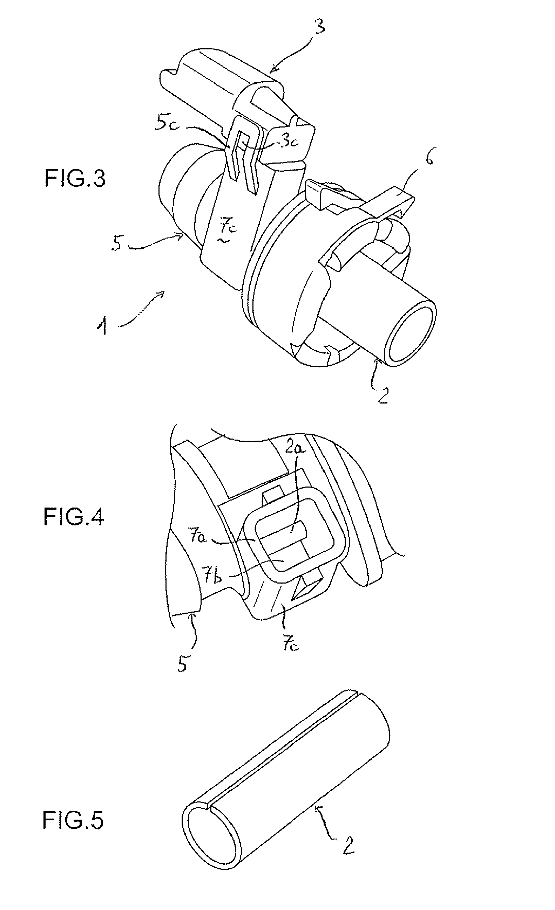

Comme notamment illustré aux figures 2, 3 et 6, un dispositif de réchauffage 1 selon l'invention comporte essentiellement, autour d'un tube métallique 2 de préférence en aluminium et fendu selon l'une de ses génératrices (voir figure 5) qui est destiné à véhiculer un fluide à réchauffer ;
- un connecteur électrique chauffant 3 délimité par une gaine isolante en matière thermoplastique sensiblement en forme de « L », dont une partie de support 3a formée par la base du « L » porte une thermistance 4 à effet « CTP » sur les deux faces de laquelle sont respectivement soudées deux languettes métalliques 4b et 4c, et dont l'autre partie de connexion électrique 3b est destinée à l'alimenter en électricité, et
- un manchon ou insert de connectique rapide 5 en matière thermoplastique monté par emmanchement autour d'une extrémité du tube 2, ce manchon 5 présentant une extrémité de raccordement 5a axialement extérieure au tube 2 en queue de sapin et une extrémité opposée 5b verrouillée sur le tube par une épingle 6, ce manchon 5 définissant, tangentiellement autour du tube 2, un logement 7 qui contient une colle thermique 8 enrobant la thermistance 4.

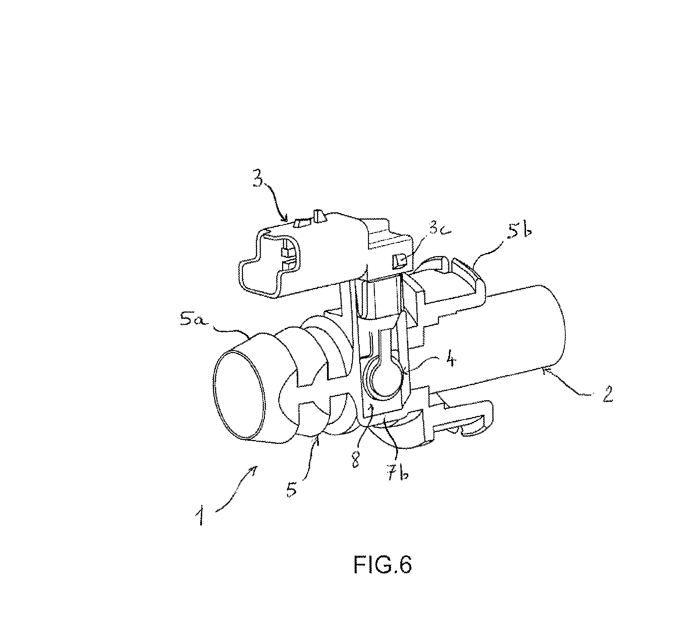

Comme visible sur ces figures, le connecteur 3 est dans cet exemple clipé sur le manchon 5, via des moyens de clipage 3c (voir figures 3 et 6) formés sur la partie de support 3a du connecteur 3 et coopérant avec des moyens complémentaires 5c (voir figure 3) formés sur la face externe du logement 7 à proximité de son entrée 7a radialement extérieure pour le manchon 5, par où est insérée la colle 8 puis la thermistance 4.

Le logement 7 se termine par un fond 7b (voir figure 6) en regard de cette entrée 7a et relié à celle-ci par une paroi 7c dans cet exemple globalement prismatique et de section quasiment rectangulaire (voir notamment la figure 4), dont la face radialement interne aboutit au contact du tube 2. On notera que cette paroi 7c pourrait présenter en variante un autre type de géométrie, par exemple globalement cylindrique (i.e. de section courbe, par exemple elliptique ou circulaire), pourvu que son volume interne soit suffisant pour entourer la thermistance 4.

Selon l'invention, cette paroi 7c du manchon 5 est tronquée en étant complétée par une portion concave en arc de cercle 2a formée par le tube 2 lui-même qui fait saillie dans le logement 7. Et comme illustré aux figures 1 et 6, la thermistance 4 une fois plongée dans le logement 7 rempli de la colle thermique 8 est entourée par celle-ci en étant située à distance du tube 2 (1 mm environ séparant ce dernier de la languette adjacente 4b de la thermistance 4). On comprend que la colle 8 assure ainsi le pont thermique entre le composant « CTP » 4a et le tube 2, en garantissant en outre l'étanchéité autour de la thermistance 4 du fait qu'elle entoure complètement cette dernière et également le maintien du tube 2 dans la connectique du fait qu'elle est prévue pour adhérer fortement au matériau constitutif de ce tube 2 (e.g. l'aluminium).

A cet effet, on peut avantageusement utiliser pour cette colle thermique 8 une colle époxy chargée avec de l'alumine et/ou du nitrure de bore, les colles époxy étant notamment caractérisées par une très bonne adhésion à l'aluminium et ces charges permettant d'améliorer la conductivité thermique de la colle 8 sans la rendre électriquement conductrice.

La Demanderesse a établi qu'une valeur de conductivité thermique de 1 Wm⁻¹K⁻¹ pour cette colle 8 donne de très bons résultats lorsque la thermistance 4 est placée à environ 1 mm du tube. Comme la résistance thermique est donnée par la formule Rₜₕ = e / (S x λ) où e est l'épaisseur, S la surface en contact et λ la conductivité thermique de la colle, pour réduire cette résistance et donc améliorer la conduction thermique, il faut réduire l'épaisseur de colle 8 et/ou augmenter soit la surface d'échange, soit sa conductivité thermique.

Comme illustré schématiquement à la figure 1, la colle thermique 8 permet d'augmenter la surface d'échange puisqu'elle « ramène » de la chaleur diffusée par l'arrière de la thermistance 4 sur le tube 2. La Demanderesse a établi en étudiant le flux de chaleur en régime permanent dans le logement 7 que la colle 8 conduit efficacement la chaleur vers le tube 2, qui fait office de diffuseur pour le fluide.

On notera que le logement 7 pour la thermistance 4, qui est formé entre le tube 2 et la paroi 7c du manchon 5 et qui est préalablement rempli de la colle thermique 8 venant au contact du tube 2, permet de s'assurer que cette thermistance 4 est bien enrobée par la colle 8 après avoir été plongée dans celle-ci. Cette colle 8 doit être prévue suffisamment liquide pour éviter l'emprisonnement de bulles d'air, du fait que l'air est un très mauvais conducteur de la chaleur.

On notera également que ce logement 7 permet de s'affranchir des différences de volume de colle 8 requis d'un tube 2 à un autre du fait des imperfections usuelles de ces tubes 2, assurant ainsi un volume de colle 8 suffisant (ce volume est représenté symboliquement à la figure 2, où l'on voit qu'il épouse les parois 2a, 7a et 7c du logement 7) pour bien envelopper la thermistance 4 et les languettes 4b, 4c associées qui doivent être toutes protégées de l'humidité ambiante.

## Revendications

1. Dispositif de réchauffage (1) d'un fluide circulant dans un tube thermiquement conducteur (2), en particulier pour un raccordement rapide à un embout d'admission d'air d'un tuyau de fuite des gaz d'un moteur thermique à combustion interne, le dispositif comportant :
- au moins une thermistance « CTP » (4),
- ce tube hors duquel est positionnée la thermistance, et
- un connecteur électrique chauffant (3) dont une partie de support (3a) porte la thermistance et dont une partie de connexion électrique (3b) est destinée à l'alimenter en électricité,
**caractérisé en ce que** ce dispositif comporte en outre un manchon de raccordement (5) en matière plastique monté autour du tube et définissant, radialement entre le tube et le manchon, un logement (7) qui reçoit la thermistance à distance du tube et qui contient une colle thermiquement conductrice (8) venant au contact du tube et entourant la thermistance, de sorte que cette colle assure la conduction thermique entre la thermistance et le tube.

2. Dispositif (1) selon la revendication 1, **caractérisé en ce que** ladite colle (8) est apte à adhérer au tube (2), lequel est métallique et de préférence à base d'aluminium, de sorte à le maintenir en position à l'intérieur du manchon (5) et à assurer en outre l'étanchéité du raccordement.

3. Dispositif (1) selon la revendication 1 ou 2, **caractérisé en ce que** la thermistance (4) est à effet « CTP », deux languettes métalliques (4b et 4c) étant respectivement soudées sur les deux faces de cette thermistance et l'ensemble étant immergé à distance du tube (2) dans ladite colle (8).

4. Dispositif (1) selon une des revendications précédentes, **caractérisé en ce que** ledit logement (7) présente une entrée (7a) débouchant à l'extérieur du manchon (5) pour l'insertion de la thermistance (4) et se termine par un fond (7b) au moins en partie en regard de cette entrée, de sorte que ce logement s'étende sensiblement tangentiellement au tube (2).

5. Dispositif (1) selon la revendication 4, **caractérisé en ce que** l'entrée (7a) et le fond (7b) dudit logement (7) sont reliés entre eux par une paroi (7c) dont une face radialement interne aboutit au contact du tube (2), cette paroi étant par exemple de section transversale polygonale ou arrondie et étant tronquée par une portion concave en arc de cercle (2a) formée par le tube qui fait saillie dans ce logement.

6. Dispositif (1) selon la revendication 4 ou 5, **caractérisé en ce que** le connecteur (3) est monté par clipage sur le manchon (5), par l'intermédiaire de moyens de clipage (3c) qui sont formés sur ladite partie de support (3a) du connecteur et qui coopèrent avec des moyens complémentaires (5c) formés sur la face externe dudit logement (7) à proximité de ladite entrée (7a).

7. Dispositif (1) selon une des revendications précédentes, **caractérisé en ce que** le manchon (5) forme un embout de raccordement dans lequel est emmanchée une extrémité du tube (2), ce manchon présentant une extrémité de raccordement (5a) axialement extérieure au tube de préférence en forme de queue de sapin, et une extrémité opposée (5b) de verrouillage sur ce tube par un organe de verrouillage (6) tel qu'une épingle.

8. Dispositif (1) selon une des revendications précédentes, **caractérisé en ce que** ladite colle (8) est une colle thermique époxy électriquement isolante qui est chargée par au moins une charge inorganique, de préférence l'alumine et/ou le nitrure de bore.

9. Dispositif (1) selon la revendication 8, **caractérisé en ce que** la thermistance (4) est positionnée à environ 1 mm du tube (2) et présente de préférence une conductivité thermique d'environ 1 W m⁻¹K⁻¹.

10. Dispositif (1) selon une des revendications précédentes, **caractérisé en ce que** le tube (2) est à base d'aluminium et présente une paroi en forme de cylindre fendu sur sa longueur de préférence obtenu par roulage.

11. Procédé d'assemblage d'un dispositif de réchauffage (1) selon une des revendications précédentes, **caractérisé en ce qu'**il comprend essentiellement le remplissage dudit logement (7) du manchon (5) par ladite colle (8) à l'état liquide de manière qu'elle vienne au contact du tube (2), puis l'immersion totale de la thermistance (4) dans cette colle pour que cette dernière assure la conduction thermique entre cette thermistance et le tube tout en maintenant ce dernier de manière étanche à l'intérieur du manchon.

12. Système de raccordement rapide à un embout d'admission d'air d'un tuyau de fuite des gaz d'un moteur thermique à combustion interne, **caractérisé en ce qu'**il comprend un dispositif de réchauffage (1) selon une des revendications 1 à 10.
